Europäisches Patentamt

European Patent Office

Office européen des brevets

(19)

(11) Veröffentlichungsnummer: **0 302 231**
**A2**

(12) **EUROPÄISCHE PATENTANMELDUNG**

(21) Anmeldenummer: 88110536.5

(22) Anmeldetag: 01.07.88

(51) Int. Cl.⁴: **F02M 31/20 , F02M 31/02 ,**
**F28D 7/10**

(30) Priorität: 05.08.87 DE 3725881

(43) Veröffentlichungstag der Anmeldung:
08.02.89 Patentblatt 89/06

(84) Benannte Vertragsstaaten:
**DE ES FR GB IT SE**

(71) Anmelder: **Süddeutsche Kühlerfabrik Julius**
**Fr. Behr GmbH & Co. KG**
**Mauserstrasse 3**
**D-7000 Stuttgart 30(DE)**

(72) Erfinder: **Förster, Michael**
**Im Mühlwingert 38**
**D-7141 Kirchberg/Murr(DE)**
Erfinder: **Rose, Wolfgang**
**Rosenweg 10**
**D-7251 Weissach-Flacht(DE)**
Erfinder: **Waldmann, Heinrich**
**Kreuznacher Strasse 25**
**D-7000 Stuttgart 50(DE)**

(74) Vertreter: **Riedel, Peter, Dipl.-Ing. et al**
**Süddeutsche Kühlerfabrik Julius Fr. Behr**
**GmbH & Co. KG Mauserstrasse 3**
**D-7000 Stuttgart 30(DE)**

(54) Einrichtung zur Veränderung der Temperatur des einer Brennkraftmaschine eines Kraftfahrzeugs zugeführten Kraftstoffs.

(57) Eine Einrichtung zur Veränderung der Temperatur des Kraftstoffs, der einer Brennkraftmaschine eines Kraftfahrzeugs zugeführt wird, umfaßt einen Wärmetauscher (8). Der Wärmetauscher (8) besitzt zum Zwecke der Kühlung des Kraftstoffs einen ersten, vom Kraftstoff durchflossenen Hohlraum (27) und einen zweiten, vom Kältemittel einer Kälteanlage durchströmten Hohlraum (37). Um die Temperatur des Kraftstoffs in einem einzigen Bauteil in beliebiger Weise zu verändern, ist eine in den Wärmetauscher (8) integrierte Heizvorrichtung (24) vorgesehen, die mit Wandteilen des ersten Hohlraums (27) in guter wärmeleitender Verbindung steht.

FIG 2

# Einrichtung zur Veränderung der Temperatur des einer Brennkraftmaschine eines Kraftfahrzeugs zugeführten Kraftstoffs

Die Erfindung betrifft eine Einrichtung zur Veränderung der Temperatur des einer Brennkraftmaschine eines Kraftfahrzeugs zugefuhrten Kraftstoffs der im Oberbegriff des Anspruch 1 angegebenen Gattung. Eine solche Einrichtung ist beispielsweise aus der DE-OS 33 30 250 bekannt. Derartige Kraftstoffversorgungssysteme für Otto-Motore sind dazu vorgesehen, bei hohen Temperaturen im Motorraum die Gefahr der Bildung von Dampfblocks in den Kraftstoffleitungen zu vermeiden. Aber auch bei Dieselkraftstoff, der nicht zum Verdampfen neigt, ist eine wesentliche Temperaturerhöhung unerwünscht, da mit der Erwärmung das Volumen größer wird und damit der Energieinhalt pro Volumen absinkt. Da die Leistungsregelung von Dieselbrennkraftmaschinen allein über das eingespritzte Kraftstoffvolumen erfolgt, hat eine starke Erwärmung des Kraftstoffes eine spürbare Leistungsminderung des Antriebsaggregates des Kraftfahrzeugs zur Folge.

Bekanntlich müssen Kraftfahrzeuge auch dem Einsatz bei sehr niedrigen Temperaturen bis zu ca. -40° Celsius genügen. Bei derart niedrigen Temperaturen kommt es jedoch häufig zum Ausflocken des Paraffins im Dieselkraftstoff, wodurch das Kraftstoffilter verstopft wird. Zur Beseitigung des Ausflockens der Paraffinbestandteile sind bereits elektrisch beheizte Heizpatronen bekannt, die zum Erwärmen des Dieselkraftstoffs in der Kraftstoffleitung dienen. Es handelt sich bei den bekannten Heizeinrichtungen um zusätzliche Aggregate, die separat von der Kühleinrichtung für den Kraftstoff eingebaut werden müssen.

Es ist daher die Aufgabe der vorliegenden Erfindung, eine Einrichtung der eingangs genannten Gattung zu schaffen, bei der die Temperatur des Kraftstoffs in beliebiger Weise in einem einzigen Bauteil verändert werden kann.

Diese Aufgabe wird bei einer Einrichtung zur Veränderung der Temperatur des einer Brennkratfmaschine eines Kraftfahrzeugs zugeführten Kraftstoffs der genannten Art erfindungsgemäß dadurch gelöst, daß eine Heizeinrichtung zur Erwärmung des Kraftstoffs vorgesehen ist, die mit Wandteilen des ersten Hohlraums in guter wärmeleitender Verbindung steht. Dadurch ist in einem einzigen Bauteil die Möglichkeit gegeben, je nach herrschender Außentemperatur bzw. Temperatur unter der Motorhaube den Kraftstoff zu kühlen oder zu erwärmen.

Eine erste Ausführung einer Weiterbildung des Erfindungsgegenstandes besteht darin, daß die Heizeinrichtung eine elektrische Widerstandsheizung ist. Dies bedingt jedoch eine Bereitstellung der Heizenergie durch das elektrische Bordnetz des Fahreugs.

Zur Benutzung der ohnehin im Fahrzeug vorhandenen Wärmeenergie, die als Verlustwärme über den Kühlwasserkreislauf abgeführt wird, ist eine zweite Ausführungsvariante vorgesehen, die darin besteht, daß als Heizvorrichtung der Wärmetauscher einen dritten Hohlraum aufweist, der vom Kühlwasser des Motors durchströmt wird. Zweckmäßigerweise ist in die Anschlußleitung für das Kühlwasser ein Absperrventil geschaltet, durch das die Durchströmung des Wärmetauschers des Kühlwassers beeinflußbar ist. Damit ein gleichzeitiger Kühl- und Heizbetrieb in dem Wärmetauscher vermieden wird, ist es von Vorteil, daß das Absperrventil in Abhängigkeit des Betriebszustandes der Kälteanlage gesteuert wird, derart, daß bei eingeschalteter Kälteanlage das Absperrventil geschlossen ist. Als weiteres Schaltkriterium für den Heizbetrieb im Wärmetauscher wird vorgeschlagen, daß das Absperrventil nur bei Unterschreitung einer vorgegebenen Temperaturschwelle der Außentemperatur in seine Öffnungsstellung bringbar ist. Um ein feinfühliges Regeln der Heizleistung zu erreichen, ist es von Vorteil, daß das Absperrventil mit einer elektromechanischen Betätgungsvorrichtung versehen ist, welche mit pulsweitenmodulierten Signalen angesteuert wird. Die elektromechanische Betätigungsvorrichtug kann mit einer elektronischen Regeleinrichtung in Verbindung stehen, welche die verschiedensten Parameter, beispielsweise Temperatur des Kühlwasserkreislaufs. Außentemepratur usw. für die Erzeugung der Steuerimpulse berücksichtigt. Als alternative Ausführung des Stellmittels des Absperrventils wird ein Dehnstoffelement vorgeschlagen, welches vom Kraftstoff umspült wird und somit die aktuelle Temperatur des Kraftstoffes als Regelkriterium benutzt.

Gemäß einer bevorzugten Weiterbildung des Erfindungsgegenstandes besteht der Wärmetauscher aus drei konzentrischen Rohren, wobei ein Hohlraum im Innenrohr und zwei Hohlräume durch den radialen Abstand zweier benachbarter Rohre sowie stirnseitiger Verschluß- bzw. Anschlußstücke gebildet werden. Bei einer solchen Bauweise ist vorzugsweise der zweite Hohlraum, durch den das Kältemittel strömt, im Innenrohr, der erste Hohlraum, durch den der Kraftstoff fließt, zwischen Innenrohr und mittlerem Rohr und der dritte Hohlraum zwischen mittlerem Rohr und Mantelrohr angeordnet. Zur Verbesserung der Kühlleistung wird vorgeschlagen, daß im zweiten Hohlraum ein den Querschnitt des Innenrohres verringernder Verdrängungskörper angeordnet ist, der über mindestens eine Wellrippe, vorzugsweise drei Wellrippen, an der Wandung des Innenrohres abgestützt ist und dessen Enden kegelförmig ausgebildet sind. Zur Steigerung der Wärmeübertragungsleistung ist es vorteilhaft, daß jeweils im ersten und dritten Hohlraum Turbulenzbleche angeordnet sind.

Die erfindungsgemäße Einrichtung ist nachstehend anhand der Zeichnung näher erläutert.

In der Zeichnung zeigt:

Fig. 1 Eine schematische Darstellung eines Kältekreislaufs und eines Kühlwasserkreislaufs eines Kraftfahrzeugs.

Fig. 2 Einen Wärmetauscher zum Heizen und Kühlen des Kraftstoffs im Längsschnitt.

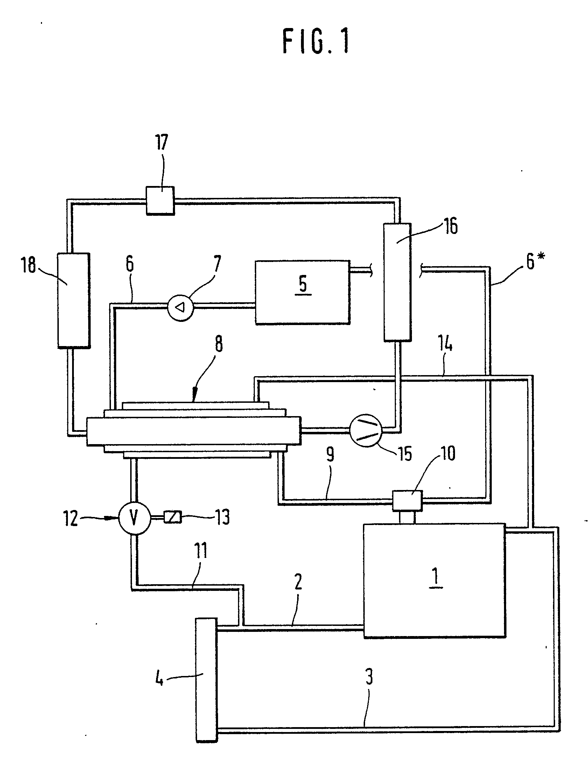

In Fig. 1 ist eine Brennkraftmaschine 1 eines Kraftfahrzeugs dargestellt, die über Kühlwasserleitungen 2 und 3 mit einem Wasserkühler 4 verbunden ist. Von einem Kraftstofftank 5 führt eine Kraftstoffleitung 6 unter Zwischenschaltung einer Kraftstofförderpumpe 7 zu einem Wärmetauscher 8. Von dem Wärmetauscher 8 führt eine Kraftstoffleitung 9 zu einer Einspritzeinrichtung 10 der Brennkraftmaschine 1. Die Einspritzrichtung 10 ist über eine Kraftstoff-Rücklaufleitung 6" mit dem Kraftstofftank 5 verbunden. An den Wärmetauscher 8 ist außerdem eine Kühlwasserleitung 11 angeschlossen, in die ein Absperrventil 12 geschaltet ist. Das Absperrventil 12 ist mit einer elektromechanischen Stelleinrichtung 13 versehen. Von dem Wärmetauscher 8 führt eine Kühlwasserleitung 14 zurück zur Brennkraftmaschine 1.

Eine Kälteanlage umfaßt einen Kompressor 15, einen Kondensator 16, ein Expansionsventil 17 und einen Verdampfer 18, die jeweils durch Kältemittelleitungen miteinander verbunden sind. In die Kältemittelleitung zwischen dem Verdampfer 18 und der Saugseite des Kompressors 15 ist der Wärmetauscher 8 geschaltet.

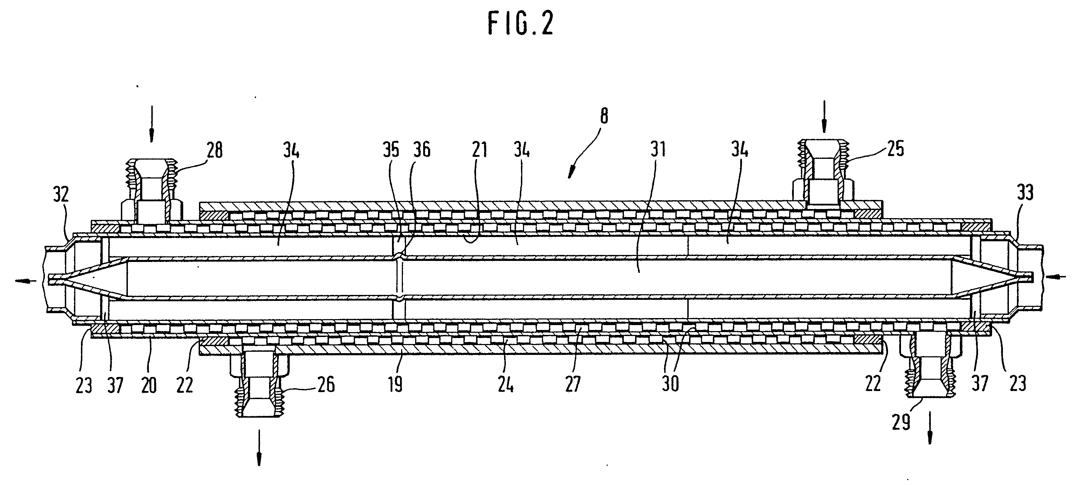

In Fig. 2 ist der Wärmetauscher 8 gezeigt, der aus einem Außenrohr 19, einem mittleren Rohr 20 und einem Innenrohr 21 besteht. Zwischen den Rohren 19 und 20 sowie 20 und 21 sind endseitig Verschlußstücke 22 und 23 in Form von Ringen vorhanden. Zwischen dem Außenrohr 19 und dem mittleren Rohr 20 wird ein Ringraum gebildet, der nachfolgend als dritter Hohlraum 24 bezeichnet wird. Dieser dritte Hohlraum 24 ist mit einem Zulaufanschluß 25 und einem Rücklaufanschluß 26 für das Kühlwasser versehen. Zwischen dem mittleren Rohr 20 und dem Innenrohr 21 ist ein erster Hohlraum 27 gebildet, der mit Anschlussen 28 und 29 für den Kraftstoff versehen ist. In beiden Hohlräumen 24 und 27 befinden sich Turbulenzbleche 30.

In dem Innenrohr 21, das den zweiten Hohlraum 37 bildet, befindet sich ein rohrförmiger Verdrängungskörper 31, dessen Enden kegelig gestaltet sind. Diese kegeligen Enden liegen in aufgetulpten Bereichen von Anschlußstücken 32 und 33, so daß die Querschnittsvergrößerung im aufgetulpten Bereich zumindest teilweise durch die zunehmende Verdrängung mittels der kegeligen Enden kompensiert wird. Zwischen dem Verdrängungskörper 31 und dem Innenrohr 21 sind drei in axialer Richtung hintereinander liegende Wellrippen 34 angeordnet, die sowohl an dem Innenrohr 21 als auch an dem Verdrängungskörper 31 anliegen. Zwischen zwei der Wellrippen 34 befindet sich ein Spalt 35, in den eine radiale Sikke 36 an der Mantelfläche des Verdrängungskörpers 31 ragt und damit in axialer Richtung eine formschlüssige Verbindung mit den Wellrippen 34 bildet. Auf diese Weise ist eine Sicherung des Verdrängungskörpers 31 in axialer Richtung gegeben. Die Durchströmungsrichtung der drei Medien durch den Wärmetauscher ist beispielsweise durch die eingetragenen Richtungspfeile angegeben.

## Ansprüche

1. Einrichtung zur Veränderung der Temperatur des einer Brennkraftmaschine (1) eines Kraftfahrzeugs zugeführten Kraftstoffs, die einen Wärmetauscher (8) umfaßt, der zum Zwecke der Kühlung des Kraftstoffs einen ersten vom Kraftstoff durchflossenen Hohlraum (27) und einen zweiten vom Kältemittel einer Kälteanlage durchströmten Hohlraum (37) umfaßt, **dadurch gekennzeichnet,** daß eine Heizvorrichtung zur Erwärmung des Kraftstoffs vorgesehen ist, die mit Wandteilen (mittleres Rohr 20) des ersten Hohlraums (27) in guter wärmeleitender Verbindung steht.

2. Einrichtung nach Anspruch 1, **dadurch gekennzeichnet,** daß die Heizeinrichtung eine elektrische Widerstandsheizung ist.

3. Einrichtung nach Anspruch 1, **dadurch gekennzeichnet,** daß als Heizvorrichtung der Wärmetauscher (8) einen dritten Hohlraum (24) aufweist, der vom Kühlwasser der Brennkraftmaschine (1) durchströmt wird.

4. Einrichtung nach Anspruch 3, **dadurch gekennzeichnet,** daß in eine Anschlußleitung (11) für das Kühlwasser ein Absperrventil (12) geschaltet ist.

5. Einrichtung nach Anspruch 4, **dadurch gekennzeichnet,** daß das Absperrventil (12) in Abhängigkeit des Betriebszustandes der Kälteanlage gesteuert wird, derart, daß bei eingeschalteter Kälteanlage das Absperrventil (12) geschlossen ist.

6. Einrichtung nach Anspruch 4 oder 5, **dadurch gekennzeichnet,** daß das Absperrventil (12) nur bei Unterschreitung einer vorgegebenen Temperturschwelle der Außentemperatur in seine Öffnungsstellung bringbar ist.

7. Einrichtung nach einem der Ansprüche 4 bis 6, **dadurch gekennzeichnet,** daß das Absperrventil (12) mit einer elektromechanischen Betätigungsvorrichtung (13), versehen ist, welche mit pulsweitenmodulierten Signalen angesteuert wird.

8. Einrichtung nach Anspruch 4, **dadurch gekennzeichnet,** daß das Absperrventil mittels eines Dehnstoffelementes betätigt wird, welches vom Kraftstoff umspült wird und somit die aktuelle Temperatur des Kraftstoffes als Regelkriterium benutzt.

9. Einrichtung nach Anspruch 1, **dadurch gekennzeichnet,** daß der Wärmetauscher (8) aus drei konzentrischen Rohren (19, 20, 21) besteht. wobei ein Hohlraum (37) im Innenrohr (21) und zwei Hohlräume (24, 27) durch den radialen Abstand zweier benachbarter Rohre (19, 20, 21) sowie stirnseitiger Verschluß- bzw. Anschlußstücke (22, 23, 32, 33) gebildet werden.

10. Einrichtung nach Anspruch 9, **dadurch gekennzeichnet,** daß der zweite Hohlraum (37) im Innenrohr (21), der erste Hohlraum (27) zwischen Innenrohr (21) und mittlerem Rohr (20) und der dritte Hohlraum (24) zwischen mittlerem Rohr (29) und Mantelrohr (19) angeordnet ist.

11. Einrichtung nach Anspruch 10, **dadurch gekennzeichnet,** daß im zweiten Hohlraum (37) ein den Querschnitt des Innenrohres (21) verringernder Verdrängungskörper (31) angeordnet ist, der über mindestens eine Wellrippe (34), vorzugsweise drei Wellrippen (34), an der Wandung des Innenrohres 21 abgestützt ist und dessen Enden kegelförmig ausgebildet sind.

12. Einrichtung nach Anspruch 10 oder 11, **dadurch gekennzeichnet,** daß jeweils im ersten und dritten Hohlraum (27, 24) Turbulenzbleche (30) angeordnet sind.

13. Einrichtung nach einem der Ansprüche 10 bis 12, **dadurch gekennzeichnet,** daß die Durchströmung jeweils zwei benachbarter Hohlräume (24, 27, 37) im Gegenstrom erfolgt. Verbindung steht.

# FIG.1

# FIG.2

EP 0 302 231 A2